# EUROPEAN PATENT SPECIFICATION

(11) **EP 3 203 638 B1**
(45) Date of publication and mention of the grant of the patent: **20.11.2019**
(21) Application number: 17157177.1
(22) Date of filing: 22.12.2005
(51) Int. Cl.: H04B 1/40, G08G 5/00

(54) **RADIO SYSTEM WITH REDUNDANCY**
FUNKSYSTEM MIT REDUNDANZ
SYSTÈME RADIO À REDONDANCE

(30) Priority: 24.12.2004 GB 0428258
(43) Date of publication of application: 09.08.2017
(62) Divisional of application: 05112815.5
(73) Proprietor: Leonardo S.p.A., 00195 Roma (IT)
(72) Inventor: FANTAPPIE', Pierluigi, I-50013 CAMPI BISENZIO (Firenze) (IT)
(74) Representative: Deambrogi, Edgardo

(56) References cited:
- EP-A1- 0 715 784
- DE-A1- 19 814 096
- US-B1- 6 687 217

## Description

This invention relates to an electronic system having duplicate electronic units and a change-over mechanism which responds to a malfunction in a unit currently in use by switching into service a backup unit. The invention arose in connection with the design of an air traffic control radio systems where even a short break of communication between an aircraft and a ground station could present a serious safety hazard.

A conventional air traffic control radio system of this type has two separate radio units and a third unit, which forms the change-over mechanism. Each of these three units has its own chassis forming a shelf supported in a common cabinet. At any one time a selected radio unit is set up to be the primary unit whilst the other unit provides so-called "redundancy." The change-over mechanism monitors the performance of the primary unit and, when a fault is detected, disconnects the primary unit and replaces it by the secondary unit.

A problem associated with this known system is that no provision is included for a failure of the change-over mechanism itself. Because the change-over mechanism controls connections to the radio transceivers, there is a potential for a failure within it to cause a complete failure of the whole system. It is not possible to cure this problem by providing duplicate change-over mechanisms because a third mechanism would then be required to manage change-over between them thereby introducing yet another component whose failure could cause a catastrophic shut-down of the whole system.

WO 95/06363 discloses a method and system for redundancy control of the baseband primary channel interfaces of receivers in a digital transmission device based on monitoring the quality of a signal received from the transmission line.

According to the invention there is provided an electronic system comprising two or more units as defined in the claims.

The invention is most applicable to so called "software" radios because it is possible to program the inbuilt processor and memory with software to perform the fault detection and change-over functions. Thus, the change-over mechanism can be implemented without the addition of any hardware and consequently without the inclusion of additional physical components which themselves might be subject to failure.

Where each unit includes a transmitter and a receiver, the change-over can be effected just for transmitters or just for receivers so that, after change-over, the transmitter of one unit and the receiver of the other unit are operational. This mechanism allows one to have a system resilient even when a double "crossed" failure arises. However the change-over decision is preferably made according to an algorithm, which gives preference to the use of a transmitter and receiver of the same unit at any one time.

According to the invention there is a data link between the radio units by which the processor of the radio unit currently in use is able to derive an indication of the relative operational effectiveness of both units; and to trigger a change-over operation when a reserve unit is indicated as being more effective than a unit currently in use. The data link can be a cable or an infra-red or short range radio link.

Normally there will be just a main radio unit and one reserve unit. However it is possible to include more than one reserve unit if extra redundancy is required.

One of the problems associated with known systems is that the reserve radio unit will, in the absence of a fault, remain unused for a long period of time. Radio units suffer from an ageing process which means that faults can develop with time, even when the unit is not in use; some failures could develop in the reserve unit and it will go unnoticed until the unit is required to be used. By employing the invention it is possible to overcome this problem by building into the process of deciding when to effect a change-over, a factor depending on time or amount of use so that a change-over occurs regularly, even when there is no fault.

The processor preferably makes a decision to trigger a change-over operation by measuring the operational effectiveness of each unit and comparing the measurements to determine which unit would best be used. These measurements or "scores" can be calculated from factors, which include fault conditions or possible fault conditions of various elements or processes within the radio units. This technique is considered to be highly beneficial because it ensures that, when conditions are not ideal for either radio unit, the best one is always selected for use. The principle could be applied to many different forms of electronic equipment.

Thus, there is provided an electronic system comprising a number of similar units and a change-over mechanism designed to detect a fault in a unit which is operating and, in response to such detection, to substitute it with another unit; characterised in that the change-over mechanism is designed to monitor different properties of the unit which is operating, to derive an overall performance measurement, to compare the performance measurements for the different units, and to select for use the unit with the best performance measurement.

One embodiment of the invention will now be described by way of example with reference to the accompanying drawings in which:
Fig 1 illustrates a radio system constructed in accordance with the invention and incorporating duplicate radio transceivers;
Fig 2 illustrates a primary radio transceiver of the system shown in Fig 1 and includes a diagrammatic representation of a procedure whereby complete or partial change-over to a reserve unit is performed at appropriate times.

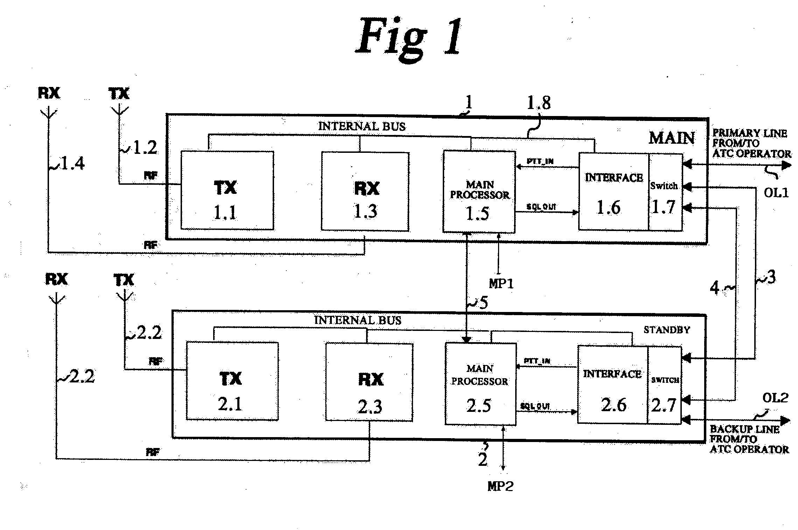

Referring firstly to Fig 1 there are shown two identical simplex radio transceivers 1 and 2, each of which has its own chassis and forms a shelf in a common cabinet, not shown. For the purposes of this description the transceiver 1 is assumed to be initially set up to be the primary unit whilst the transceiver 2 is initially a backup unit. Identical components associated with respective transceivers are denoted on the drawing with corresponding reference numerals.

The primary transceiver 1 comprises a transmitter 1.1 having an associated antenna 1.2; a receiver 1.3 having an associated antenna 1.4; a main processor 1.5; interface circuitry 1.6 which converts digital signals to analogue form (and vice versa); and a switching facility 1.7 included as part of the circuitry 1.6. The components 1.1, 1.3, 1.5 and 1.6 are all connected by a bus 1.8.

Under the control of the processor 1.5, the switch 1.7 switches signals from an operator on line OL1 either to transmitter 1.1 or to line 3. It also switches signals selectively from receiver 1.3 or line 4 onto the line OL1 and thence to the operator.

The secondary transceiver 2 is identical to transceiver 1, the only difference being that software loaded into the processor 1.5 during an initial setup procedure instructs the unit 1 to behave initially as the primary transceiver and the unit 2 as the backup or reserve transceiver.

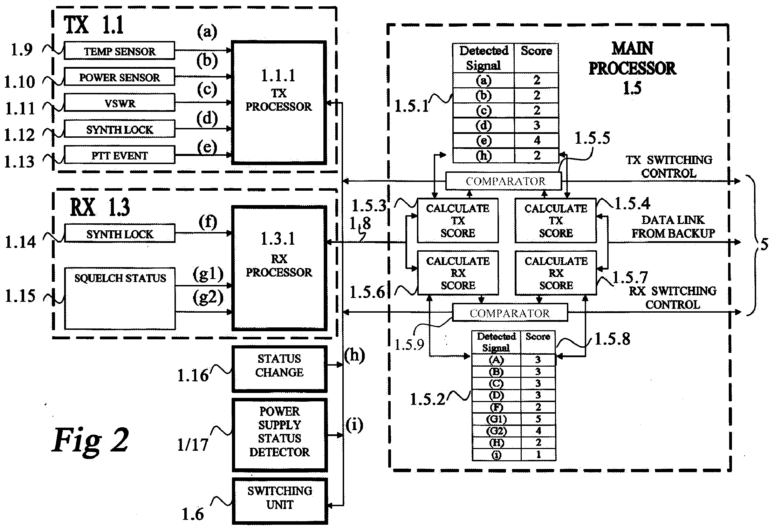

Referring now to Fig 2, the transmitter 1.1 contains a processor 1.1.1 which receives signals (a) to (e) as follows. The transceivers are connected by a data link 5.
Signal (a) is derived from a temperature sensor 1.9 and indicates that the temperature of the processor 1.1.1 is below a threshold level which might typically be about 90 degrees centigrade.
Signal (b) is derived from a power measurement device 1.10 and indicates that the output power to the antenna 1.2 is either above a lower threshold level when the transmitter is in use but without modulation, or above a higher threshold level when the transmitter is in use with modulation. A typical lower threshold level might be 5 watts and a typical upper threshold might be 50 watts.
Signal (c) is derived from a device 1.11 which calculates the voltage standing wave ratio on the output line to the antenna 1.2, and indicates that this is below a threshold value, signifying that power fed to the antenna is not being reflected back and that the antenna is therefore functioning correctly.
Signal (d) is derived from a frequency synthesiser 1.12 within the transmitter and indicates that this has locked onto a preset desired frequency.
Signal (e) is derived from a counter 1.13 which counts the number of PTT (press to talk) events since the last change-over operation. A signal (e) is produced so long as this count is below a preset maximum, eg four. After a changeover operation the counter is reset to zero.

The receiver contains a processor 1.3.1 which is arranged to receive signals (f), (g1) and (g2) as follows.
Signal (f) is obtained from a frequency synthesiser 1.14 and is equivalent to signal (d) of the transmitter.
Signal (g1) is derived from a squelch status detector 1.15 indicating that the receiver is working and detecting a good signal.
Signal (g2) is a squelch status signal indicating that the receiver is working but not detecting a good signal.
Signal (h) is derived from a facility, indicated schematically at 1.16, within the main processor 1.5. It indicates that the transceiver is not currently in maintenance mode: i.e. maintenance equipment has not been connected to the port MP1 (Fig 1) and registered by the main processor 1.5 as being in a status ready for downloading software.
Signal (i) is derived from a power supply status detector 1.17. It indicates that a power supply (not shown) is working and that the radio is switched on.

All of the signals (a) to (i) are multiplexed onto the data bus 1.8 so that they can be utilised by the main processor 1.5. In addition to receiving the signals (a) to (i) from within the unit 1, the main processor of unit 1 also receives corresponding signals from the reserve unit 2 via a data link 5 which, in this particular embodiment is a cable.

The main processor 1.5 is programmed to perform the processes illustrated in Fig 2 and which will now be described. It also has an associated memory in which look-up tables 1.5.1 and 1.5.2 are stored. These tables contain a score associated with each of the signals (a) to (i) as shown on the drawing.

At 1.5.3 the processor calculates the appropriate total score for the signals (a), (b), (c), (d), (e) and (h) from the main transceiver. A similar total is calculated at 1.5.4 using information from the backup transceiver accessed via cable 5. The totals are compared at 1.5.5.

If the score for the backup unit is greater than for the main unit, a signal is applied to the data bus 1.8 instructing the processor 1.1.1 to shut down the transmitter of the main unit. This signal also instructs the switching unit 1.6 to divert signals received from an operator on line OL1 (Fig 1) onto line 3 from whence these signals for transmission are fed to the transmitter of the reserve unit. At the same time a signal is applied on the link 5 instructing the transmitter of the reserve unit to switch on.

At 1.5.6 the processor calculates the total score for the signals (a), (b), (c), (d), (f), (g1) (g2), (h), and (i) from the main transceiver; and a similar total is calculated at 1.5.7 using information from the backup transceiver accessed via cable 5. The totals are compared at 1.5.9.

If the score for the backup unit is greater than for the main unit, a signal is applied to the data bus 1.8 instructing the processor 1.3.1 to shut down the receiver of the main unit. This signal also instructs the switching unit 1.6 to cause signals received by the receiver 2.3 of the reserve unit and available on line 4, to be switched onto the line OL1 in place of the signals received at 1.3. At the same time a signal is applied on the link 5 instructing the receiver of the reserve unit to be switched on.

The scoring system as set out on Fig 2 has the following desirable effects.

Firstly, each time that the operator presses his PTT (press to talk) button, the count at 1.1.3 is advanced. After four operations (this is just an example, any number could be chosen) the score calculated at 1.5.3 loses a value of 4 making it almost inevitable that a changeover will take place. This ensures that both transmitters are regularly used so that a malfunction of either of them will become apparent soon after it has arisen.

Because the system selects the transmitter or receiver with the highest vote, one will be selected (the best one) even if there is a fault in both of them. Thus the system will try to operate even in the worst conditions.

It is possible to perform maintenance operations on any one unit eg to update software or firmware, to add or change a physical module or to change settings without disconnecting the unit from the system or removal of it from its cabinet. This is achieved because commencement of the maintenance operation causes removal the signal (h) and therefore of its associated score of 2.

It will be appreciated that the illustrated embodiment of the invention has been described only by way of example and that many variations are possible within the scope of the accompanying Claims. However it is believed that a radio system constructed on principles similar to those illustrated will be of considerable benefit to the safety of air traffic control radio systems because of the elimination of a separate change-over unit and of the risk that any such unit might itself be subject to failure.

## Claims

1. An electronic system comprising two or more units (1, 2) a data link (5) between the units (1, 2) and a change-over mechanism which is adapted to respond to a malfunction in a unit currently in use by switching into service a backup unit, **characterised in that** each unit includes:
- at least a first transmitter (1.1; 2.1) and a second receiver (1.3; 2.3), which are adapted to exchange signals with an operator line (OL1), and
- an associated main processor (1.5; 2.5) programmed to implement the change-over mechanism and perform a change-over function, wherein the main processor of the radio unit currently in use is arranged for deriving an indication of a relative performance measurement, by calculating scores respectively for the unit currently in use and for the backup unit, for comparing the performance measurements for the different units, and for selecting for use the unit (1; 2) with the best performance measurement.

2. An electronic system according to claim 1, wherein each main processor (1.5, 2.5) is arranged for receiving from each unit the following signals:
(a) a signal derived from a temperature sensor (1.9) that indicates that the temperature of the processor of the transmitter component (1.1.1) is below a threshold level;
(b) a signal derived from a power measurement device (1.10) that indicates that the output power to an antenna (1.2) associated with the transmitter is either above a lower threshold level when the transmitter is in use but without modulation, or above a higher threshold level when the transmitter is in use with modulation;
(c) signal derived from a device (1.11) which calculates the voltage standing wave ratio on the output line to the antenna (1.2) associated with the transmitter, that indicates that said voltage standing wave ratio is below a threshold value;
(d) a signal derived from a frequency synthesizer (1.12) within the transmitter, that indicates that said frequency synthesizer (1.12) has locked onto a preset desired frequency;
(e) a signal derived from a counter (1.13) which counts the number of PTT (press to talk) events since the last change-over operation, that is produced so long as this count is below a preset maximum, wherein after a changeover operation the counter is reset to zero;
(f) a signal obtained from a frequency synthesizer (1.14) within the receiver;
(g1) a signal derived from a squelch status detector (1.15) indicating that the receiver is working and detecting a good signal;
(g2) a signal as a squelch status signal indicating that the receiver is working but not detecting a good signal;
(h) a signal derived from a facility (1.16) within the main processor (1.5) that indicates that the transceiver is not currently in maintenance mode; and
(i) a signal derived from a power supply status detector (1.17) that indicates that a power supply is working and that the radio is switched on; and
wherein each main processor (1.5, 2.5) has an associated memory in which look-up tables (1.5.1, 1.5.2) are stored, that contain a score associated with each of the signals (a) to (i).

3. An electronic system according to Claim 2, wherein each main processor (1.5, 2.5) is arranged for:
- calculating the appropriate total score for the signals (a), (b), (c), (d), (e) and (h) from the main transceiver and from the backup transceiver accessed via the data link (5), said data link being a cable;
- comparing the totals; and
- if the score for the backup unit is greater than the score for the main unit, a signal is applied to shut down the transmitter of the main unit and to instruct the switching unit (1.6) to divert signals received from an operator line (1.9) to the transmitter of the reserve unit, at the same time instructing the transmitter of the reserve unit to switch on.

4. An electronic system according to Claim 2, wherein each main processor (1.5, 2.5) is arranged for:
- calculating the total score for the signals (a), (b), (c), (d), (f), (g1) (g2), (h), and (i) from the main transceiver and from the backup transceiver accessed via the data link (5), said data link being a cable;
- comparing the totals; and
- if the score for the backup unit is greater than the score for the main unit, a signal is applied to shut down the receiver of the main unit and to instruct the switching unit (1.6) to cause signals received by the receiver (2.3) of the reserve unit to be switched onto the operator line (1.9), at the same time instructing the receiver of the reserve unit to be switched on.

5. An electronic system according to Claim 1, **characterised in that** the units (1, 2) are radio units for Air Traffic Control communications.

6. An electronic system according to Claim 5, further **characterised in that** the main processor (1.5, 2.5) also serves to process signals being received or transmitted.

7. An electronic system according to Claim 1, wherein the data link (5) is a cable or an infra-red or short range radio link.

8. An electronic system according to claim 1, wherein each unit (1, 2) has at least one fault sensor (1.9, 1.10, 1.11, 1.12, 1.14, 1.15) effective to detect a fault in a component (1.1, 1.3; 2.1, 2.3) of that unit and wherein said associated main processor (1.5; 2.5) is programmed and arranged to detect the fault condition and to trigger a substitution in response to such detection, and
wherein a first unit is arranged to behave as a primary unit (1) and a second unit is arranged to behave as a backup unit (2), and the main processor (1.5) of the primary unit (1) is arranged to control a switching facility (1.7) included in the primary unit (1) so as to only switch signals from the operator line (OL1) to a transmitter (2.1) of the backup unit (2) if a fault is detected in a transmitter (1.1) of the primary unit (1), or only selectively switch to the operator line (OL1) signals from a receiver (2.3) of the backup unit (2) if a fault is detected in a receiver (1.3) of the primary unit (1), so that after the switching the transmitter (1.1; 2.1) of one unit and the receiver (2.3; 1.3) of the other unit are operational.

## Patentansprüche

1. Elektroniksystem mit zwei oder mehr Einheiten (1, 2), einer Datenverbindung (5) zwischen den Einheiten (1, 2) und einem Änderungsmechanismus, der zum Reagieren auf eine Fehlfunktion einer aktuell verwendeten Einheit durch Umschalten zu einer Backup-Einheit angepasst ist, **dadurch gekennzeichnet, dass** jede Einheit aufweist:
- mindestens einen ersten Sender (1.1; 2.1) und einen zweiten Empfänger (1.3; 2.3), die zum Austauschen von Signalen mit einer Betreiberleitung (OL1) angepasst sind, und
- einen zugeordneten Hauptprozessor (1.5; 2.5), der zum Implementieren des Änderungsmechanismus und Durchführen einer Änderungsfunktion programmiert ist, wobei der Hauptprozessor der aktuell verwendeten Funkeinheit zum Ableiten einer Angabe einer relativen Leistungsmessung durch Berechnen von Punktzahlen jeweils für die aktuell verwendete Einheit und für die Backup-Einheit angeordnet ist,
zum Vergleichen der Leistungsmessungen für die unterschiedlichen Einheiten, und zum Auswählen der Einheit (1; 2) mit der besten Leistungsmessung für eine Verwendung.

2. Elektroniksystem nach Anspruch 1, bei dem jeder Hauptprozessor (1.5, 2.5) zum Empfangen der folgenden Signale von jeder Einheit angeordnet ist:
(a) ein von einem Temperatursensor (1.9) abgeleitetes Signal, das angibt, dass die Temperatur des Prozessors der Senderkomponente (1.1.1) unterhalb eines Schwellenpegels ist;
(b) ein von einer Leistungsmessungsvorrichtung (1.10) abgeleitetes Signal, das angibt, dass die Ausgangsleistung zu einer dem Sender zugeordneten Antenne (1.2) entweder oberhalb eines niedrigeren Schwellenpegels ist, wenn der Sender ohne Modulation verwendet wird, oder oberhalb eines höheren Schwellenpegels ist, wenn der Sender mit Modulation verwendet wird;
(c) ein Signal, das von einer Vorrichtung (1.11), die den Welligkeitsfaktor auf der Ausgangsleitung zu der Antenne (1.2), die dem Sender zugeordnet ist, berechnet, abgeleitet ist und angibt, dass der Welligkeitsfaktor unterhalb eines Schwellenwerts ist;
(d) ein von einem Frequenzsynthesizer (1.12) in dem Sender abgeleitetes Signal, das angibt, dass der Frequenzsynthesizer (1.12) auf eine voreingestellte gewünschte Frequenz eingerastet ist;
(e) ein von einem Zähler (1.13), der die Anzahl von PTT (Press-to-Talk) Ereignissen seit der letzten Änderung zählt, abgeleitetes Signal, das solange produziert wird, wie diese Zählung unter einem voreingestellten Maximum ist, wobei der Zähler nach einer Änderung auf null zurückgesetzt wird;
(f) ein von einem Frequenzsynthesizer (1.14) in dem Empfänger erhaltenes Signal;
(g1) ein von einem Squelch-Statusdetektor (1.15) abgeleitetes Signal, das angibt, dass der Empfänger arbeitet und ein gutes Signal detektiert;
(g2) ein Signal als ein Squelch-Statussignal, das angibt, dass der Empfänger arbeitet, aber kein gutes Signal detektiert;
(h) ein Signal, das von einer Einrichtung (1.16) in dem Hauptprozessor (1.5) abgeleitet ist und angibt, dass der Sendeempfänger aktuell nicht in einem Wartungsmodus ist; und
(i) ein Signal, das von einem Leistungsversorgungsstatusdetektor (1.17) abgeleitet ist und angibt, dass eine Leistungsversorgung arbeitet und der Funk eingeschaltet ist; und
bei dem jeder Hauptprozessor (1.5, 2.5) einen zugeordneten Speicher aufweist, in dem Nachschlagtabellen (1.5.1, 1.5.2) gespeichert sind, die eine jedem der Signale (a) bis (i) zugeordnete Punktzahl enthalten.

3. Elektroniksystem nach Anspruch 2, bei dem jeder Hauptprozessor (1.5, 2.5) angeordnet ist zum:
- Berechnen der geeigneten Gesamtpunktzahl für die Signale (a), (b), (c), (d), (e) und (h) von dem Hauptsendeempfänger und von dem Backup-Sendeempfänger, auf die über die Datenverbindung (5) zugegriffen wird, wobei die Datenverbindung ein Kabel ist;
- Vergleichen der Gesamtpunktzahlen; und
- wenn die Punktzahl für die Backup-Einheit größer als die Punktzahl für die Haupteinheit ist, Anlegen eines Signals zum Ausschalten des Senders der Haupteinheit und zum Anweisen der Schalteinheit (1.6) zum Umleiten von Signalen, die von einer Betreiberleitung (1.9) empfangen werden, zu dem Sender der Reserveeinheit, gleichzeitig mit Anweisen des Senders der Reserveeinheit zum Einschalten.

4. Elektroniksystem nach Anspruch 2, bei dem jeder Hauptprozessor (1.5, 2.5) angeordnet ist zum:
- Berechnen der Gesamtpunktzahl für die Signale (a), (b), (c), (d), (f), (g1), (g2), (h) und (i) von dem Hauptsendeempfänger und von dem Backup-Sendeempfänger, auf die über die Datenverbindung (5) zugegriffen wird, wobei die Datenverbindung ein Kabel ist;
- Vergleichen der Gesamtpunktzahlen; und
- wenn die Punktzahl für die Backup-Einheit größer als die Punktzahl für die Haupteinheit ist, Anlegen eines Signals zum Ausschalten des Empfängers der Haupteinheit und zum Anweisen der Schalteinheit (1.6) zum Bewirken, dass von dem Empfänger (2.3) der Reserveeinheit empfangene Signale auf die Betreiberleitung (1.9) geschaltet werden, gleichzeitig mit Anweisen des Empfängers der Reserveeinheit zum Einschalten.

5. Elektroniksystem nach Anspruch 1, **dadurch gekennzeichnet, dass** die Einheiten (1, 2) Funkeinheiten für Luftverkehrsregelungskommunikationen sind.

6. Elektroniksystem nach Anspruch 5, ferner **dadurch gekennzeichnet, dass** der Hauptprozessor (1.5, 2.5) ebenfalls zum Verarbeiten von Signalen, die empfangen oder gesendet werden, dient.

7. Elektroniksystem nach Anspruch 1, bei dem die Datenverbindung (5) ein Kabel oder eine Infrarot- oder Kurzwellenfunkverbindung ist.

8. Elektroniksystem nach Anspruch 1,
bei dem jede Einheit (1, 2) mindestens einen Fehlersensor (1.9, 1.10, 1.11, 1.12, 1.14, 1.15) zum Detektieren eines Fehlers in einer Komponente (1.1, 1.3; 2.1, 2.3) der Einheit aufweist und der zugeordnete Hauptprozessor (1.5; 2.5) zum Detektieren des Fehlerzustands und Auslösen einer Ersetzung ansprechend auf solch eine Detektion programmiert und angeordnet ist, und
bei dem eine erste Einheit zum Verhalten als eine Primäreinheit (1) angeordnet ist und eine zweite Einheit zum Verhalten als eine Backup-Einheit (2) angeordnet ist und der Hauptprozessor (1.5) der Primäreinheit (1) zum Steuern einer Schalteinrichtung (1.7) in der Primäreinheit (1), so dass lediglich Signale von der Betreiberleitung (OL1) zu einem Sender (2.1) der Backup-Einheit (2) geschaltet werden, wenn ein Fehler in einem Sender (1.1) der Primäreinheit (1) detektiert wird, oder lediglich selektiv Signale von einem Empfänger (2.3) der Backup-Einheit (2) zu der Betreiberleitung (OL1) geschaltet werden, wenn ein Fehler in einem Empfänger (1.3) der Primäreinheit (1) detektiert wird, so dass nach dem Schalten der Sender (1.1; 2.1) einer Einheit und der Empfänger (2.3; 1.3) der anderen Einheit funktionsfähig sind, angeordnet ist.

## Revendications

1. Système électronique comprenant deux unités (1, 2) ou plus, une liaison de données (5) entre les unités (1, 2) et un mécanisme de permutation qui est adapté pour répondre à un dysfonctionnement dans une unité actuellement en utilisation en commutant en service une unité de secours, **caractérisé en ce que** chaque unité comporte :
- au moins un premier émetteur (1.1 ; 2.1) et un second récepteur (1.3 ; 2.3), qui sont adaptés pour échanger des signaux avec une ligne opérateur (OL1), et
- un processeur principal associé (1.5 ; 2.5) programmé pour implémenter le mécanisme de permutation et réaliser une fonction de permutation, dans lequel le processeur principal de l'unité radio actuellement en utilisation est agencé pour dériver une indication d'une mesure de performance relative, en calculant des résultats respectivement pour l'unité actuellement en utilisation et pour l'unité de secours, pour comparer les mesures de performance des différentes unités, et pour sélectionner l'unité (1, 2) avec la meilleure mesure de performance pour son utilisation.

2. Système électronique selon la revendication 1, dans lequel chaque processeur principal (1.5, 2.5) est agencé pour recevoir de chaque unité les signaux suivants :
(a) un signal dérivé d'un capteur de température (1.9) qui indique que la température du processeur du composant d'émetteur (1.1.1) est en dessous d'un niveau seuil ;
(b) un signal dérivé d'un dispositif de mesure de puissance (1.10) qui indique que la puissance de sortie d'une antenne (1.2) associée à l'émetteur est soit au-dessus d'un niveau seuil inférieur lorsque l'émetteur est en utilisation mais sans modulation, soit au-dessus d'un niveau seuil supérieur lorsque l'émetteur est en utilisation avec modulation ;
(c) un signal dérivé d'un dispositif (1.11) qui calcule le rapport d'onde stationnaire de tension sur la ligne de sortie de l'antenne (1.2) associée à l'émetteur, qui indique que ledit rapport d'onde stationnaire de tension est en dessous d'une valeur seuil ;
(d) un signal dérivé d'un synthétiseur de fréquence (1.12) au sein de l'émetteur, qui indique que ledit synthétiseur de fréquence (1.12) s'est bloqué sur une fréquence souhaitée préétablie ;
(e) un signal dérivé d'un compteur (1.13) qui compte le nombre d'événements de parole (PTT) depuis la dernière opération de permutation, qui est produit tant que ce décompte est en dessous d'un maximum préétabli, dans lequel après une opération de permutation le compteur est réinitialisé à zéro ;
(f) un signal obtenu à partir d'un synthétiseur de fréquence (1.14) au sein du récepteur ;
(g1) un signal dérivé d'un détecteur de statut de silencieux (1.15) indiquant que le récepteur fonctionne et détecte un bon signal ;
(g2) un signal en tant que signal de statut de silencieux indiquant que le récepteur fonctionne mais ne détecte pas de bon signal ;
(h) un signal dérivé d'une installation (1.16) au sein du processeur principal (1.5) qui indique que l'émetteur-récepteur n'est pas actuellement en mode entretien ; et
(i) un signal dérivé d'un détecteur de statut d'alimentation en puissance (1.17) qui indique qu'une alimentation en puissance fonctionne et que la radio est mise sous tension ; et
dans lequel chaque processeur principal (1.5, 2.5) a une mémoire associée dans laquelle sont stockées des tables de consultation (1.5.1, 1.5.2), qui contiennent un résultat associé à chacun des signaux (a) à (i).

3. Système électronique selon la revendication 2, dans lequel chaque processeur principal (1.5, 2.5) est agencé pour :
- calculer le résultat total approprié pour les signaux (a), (b), (c), (d), (e) et (h) de l'émetteur-récepteur principal et de l'émetteur-récepteur de secours auxquels on accède via la liaison de données (5), ladite liaison de données étant un câble ;
- comparer les totaux ; et
- si le résultat pour l'unité de secours est supérieur au résultat pour l'unité principale, un signal est appliqué pour arrêter l'émetteur de commutation (1.6) de dévier des signaux reçus de la ligne opérateur (1.9) vers l'émetteur de l'unité de réserve en donnant en même temps l'instruction de mettre sous tension l'émetteur de l'unité de réserve.

4. Système électronique selon la revendication 2, dans lequel chaque processeur principal (1.5, 2.5) est agencé pour :
- calculer le résultat total pour les signaux (a), (b), (c), (d), (f), (g1) (g2), (h), et (i) de l'émetteur-récepteur principal et de l'émetteur-récepteur de secours auxquels on accède via la liaison de données (5), ladite liaison de données étant un câble ;
- comparer les totaux ; et
- si le résultat pour l'unité de secours est supérieur au résultat pour l'unité principale, un signal est appliqué pour arrêter le récepteur de l'unité principale et pour donner l'instruction à l'unité de commutation (1.6) de provoquer la commutation de signaux reçus par le récepteur (2.3) de l'unité de réserve sur la ligne opérateur (1.9), en donnant en même temps l'instruction de mettre sous tension le récepteur de l'unité de réserve.

5. Système électronique selon la revendication 1, **caractérisé en ce que** les unités (1, 2) sont des unités radio pour des communications de contrôle de la circulation aérienne.

6. Système électronique selon la revendication 5, **caractérisé en outre en ce que** le processeur principal (1.5, 2.5) sert également à traiter des signaux reçus ou émis.

7. Système électronique selon la revendication 1, dans lequel la liaison de données (5) est un câble ou une liaison radio infrarouge ou de courte portée.

8. Système électronique selon la revendication 1,
dans lequel chaque unité (1, 2) a au moins un capteur de défaut (1.9, 1.10, 1.11, 1.12, 1.14, 1.15) efficace pour détecter un défaut dans un composant (1.1, 1.3 ; 2.1, 2.3) de cette unité et dans lequel ledit processeur principal (1.5 ; 2.5) associé est programmé et agencé pour détecter la condition de défaut et pour déclencher une substitution en réponse à cette détection, et
dans lequel une première unité est agencée pour se comporter en tant qu'unité primaire (1) et une seconde unité est agencée pour se comporter en tant qu'unité de secours (2), et le processeur principal (1.5) de l'unité primaire (1) est agencé pour commander une installation de commutation (1.7) incluse dans l'unité primaire (1) de façon à commuter uniquement des signaux de la ligne opérateur (OL1) à un émetteur (2.1) de l'unité de secours (2) si un défaut est détecté dans un émetteur (1.1) de l'unité primaire (1), ou à commuter uniquement sélectivement à la ligne opérateur (OL1) des signaux provenant d'un récepteur (2.3) de l'unité de secours (2) si un défaut est détecté dans un récepteur (1.3) de l'unité primaire (1), de sorte qu'après la commutation, l'émetteur (1.1 ; 2.1) d'une unité et le récepteur (2.3 ; 1.3) de l'autre unité sont opérationnels.
